# EUROPEAN PATENT APPLICATION

(11) **EP 4 686 621 A1**
(43) Date of publication of application: **04.02.2026**
(21) Application number: 24192284.8
(22) Date of filing: 01.08.2024
(51) Int. Cl.: B60T 3/00

(54) **WHEEL CHOCK**

(71) Applicant: O'Neill, Liam, Bagnelstown Carlow (IE)
(72) Inventor: O'Neill, Liam, Bagnelstown Carlow (IE)
(74) Representative: Schütte, Gearoid

(57) **Abstract**

A wheel chock (1) for a mobile support rack with ground-engaging wheels has a chock body (2) with a bottom face (3) and an inclined wheel-engaging front face (4) extending upwardly and rearwardly from the bottom face (3) at a side of the bottom face (3). A resilient grip pad (5) is attached to the bottom face (3) of the chock body (2). This resilient grip pad (5) has a lip (6) projecting outwardly of the bottom face (3) of the chock body (2) at a bottom edge (7) of the wheel-engaging front face (4). In use, the wheel-engaging front face (4) of the chock body (2) and the lip (6) of the grip pad (5) are engaged between a wheel of the support rack and the ground on which the support rack sits to lock or brake the wheel of the support rack.

## Description

### Introduction

This invention relates to a wheel chock for a mobile storage rack with ground-engaging wheels.

### Background of the Invention

Data centres store large numbers of servers mounted on mobile storage racks which are housed within large buildings. Typically, a number of servers are mounted on each storage rack, which, when loaded, can weigh in the order of 0.5 tonnes to 3 tonnes.

The present invention is directed towards providing a safe convenient system for locking these loaded data storage racks onto a temporary and safe stand hold position, but which allows the storage racks to be quickly and easily released for movement and repositioning when required.

### Summary of the Invention

According to the invention, there is provided a wheel chock for a mobile storage rack with ground-engaging wheels, the wheel chock comprising a chock body having a bottom face and an inclined wheel-engaging front face extending upwardly from the bottom face at a side of the bottom face, and a resilient grip pad attached to the bottom face and having a lip projecting outwardly of the bottom face at a bottom edge of the wheel-engaging front face.

In one embodiment of the invention the wheel-engaging front face is arcuate, curving between a top edge and the bottom edge of the wheel-engaging front face.

In another embodiment the wheel-engaging front face has a radius of curvature greater than the radius of curvature of the wheels of the storage rack.

In another embodiment the wheel-engaging front face has a radius of curvature in the range 50mm to 65mm.

In another embodiment the lip extends forwardly of the bottom edge of the wheel-engaging front face by 4mm to 6mm.

In another embodiment the lip extends forwardly of the bottom edge of the wheel-engaging front face by 5mm.

In another embodiment the grip pad comprises a thermoplastic elastomer:

In another embodiment the grip pad comprises neoprene material.

In another embodiment the grip pad is bonded to the bottom face of the chock body.

In another embodiment the grip pad is attached to the bottom face of the chock body by a number of spaced-apart rivets engaged between the grip pad and the chock body.

In another embodiment a finger-hold, finger grip or handgrip is mounted on the chock body and projects laterally outwardly from a side face of the chock body. This handgrip may conveniently be provided by an elongate rod. If desired, the handgrip may be movable between a stored position and an extended in-use position on the chock body by a pivoting or telescopic mounting arrangement for example or possibly may be detachable from the chuck body.

In another embodiment the chock body has a through-hole for reception and through passage of a release cord.

In another embodiment the through hole extends between opposite side faces of the chock body.

In another embodiment a tag is mounted on the release cord, the tag incorporating a magnet for attaching the wheel chock to the storage rack.

In another embodiment the chock body comprises a plastics material.

In another embodiment the plastics material comprises a polyurethane or a polyethylene material.

In another embodiment there is provided a pair of the wheel chocks which are interconnected by a common release chord.

### Brief Description of the Drawings

The invention will be more clearly understood by the following description of some embodiments thereof, given by way of example only, with reference to the accompanying drawings, in which:
Fig. 1 is a front perspective view of a wheel chock according to the invention;
Fig. 2 is another front perspective view of the wheel chock;
Fig. 3 is a rear perspective view of the wheel chock;
Fig. 4 is a side elevational view of the wheel chock;
Fig. 5 is a plan view of the wheel chock;
Fig. 6 is a rear elevational view of the wheel chock;
Fig. 7 is a perspective view of the wheel chock;
Fig. 8 is an elevational view of a tag associated with the wheel chock;
Fig. 9 is a front perspective view of another wheel chock according to a second embodiment of the invention;
Fig. 10 is a side elevational view of the wheel chock shown in Fig. 9;
Fig. 11 is a front perspective view of another wheel chock according to a third embodiment of the invention;
Fig. 12 is a rear perspective view of the wheel chock shown in Fig. 11;
Fig. 13 is another front perspective view of the wheel chock shown in Fig. 11;
Fig. 14 is a side elevational view of the wheel chock shown in Fig. 11;
Fig. 15 is a plan view of the wheel chock shown in Fig. 11;
Fig. 16 is an underneath plan view of the wheel chock shown in Fig. 11;
Fig. 17 is a rear elevational view of the wheel chock shown in Fig. 11;
Fig. 18 is a perspective view of the wheel chock shown in Fig. 11;
Fig. 19 is a perspective view of an interconnected pair of wheel chocks according to the invention; and
Fig. 20 is a perspective view of a wheel chock according to another embodiment of the invention.

### Detailed Description of the Preferred Embodiments

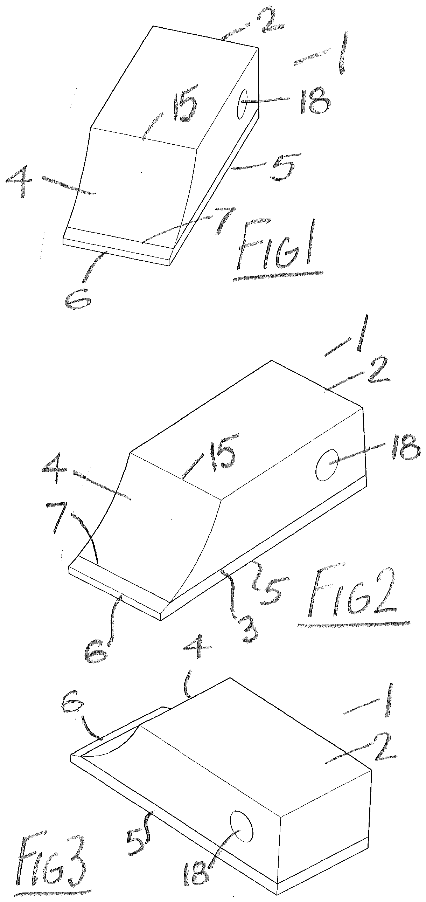

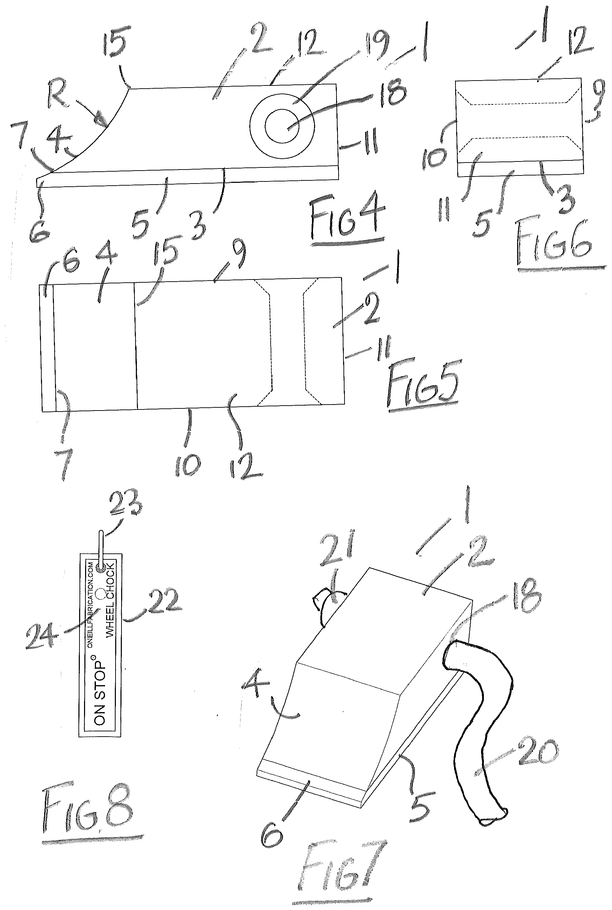

Referring to the drawings, and initially to Figs. 1 to 8 thereof, there is illustrated a wheel chock for a mobile support rack with ground-engaging wheels, the wheel chock according to the invention being indicated generally by the reference numeral 1. The wheel chock 1 has a chock body 2 with a bottom face 3 and an inclined wheel-engaging front face 4 extending upwardly and rearwardly from the bottom face 3 at a side of the bottom face 3. A resilient grip pad 5 is attached to the bottom face 3 of the chock body 2. This resilient grip pad 5 has a lip 6 projecting outwardly of the bottom face 3 of the chock body 2 at a bottom edge 7 of the wheel-engaging front face 4. In use, the wheel-engaging front face 4 of the chock body 2 and the lip 6 of the grip pad 5 are engaged between a wheel of the support rack and the ground on which the support rack sits to lock or brake the wheel of the support rack.

The chock body 2 has a rectangular bottom face 3. Opposed side faces 9, 10, and a rear face 11 extend upwardly from the bottom face 3 and are substantially perpendicular thereto. A rectangular top face 12, which is parallel to the bottom face 3, extends between upper edges of the side faces 9, 10 and the front face 4 and rear face 11.

The front face 4 is arcuate, curving between a top edge 15 and the bottom edge 7 of the wheel-engaging front face 4. It will be noted that the front face 4 has a radius of curvature greater than the radius of curvature of the wheels on the storage rack. For example, the radius of curvature R might be in the range 50mm to 65mm.

The lip 6 of the resilient grip pad 5 extends forwardly of the bottom edge 7 of the wheel-engaging front face 4 by about 5mm. It will be noted that the curvature of the wheel-engaging front face 4 continues on an upper portion of the lip 6. For example, the grip pad 5 might be about 5mm thick and the curvature is formed in an exposed upper 2mm of the grip pad 5 at the lip 6. In this case, the resilient grip pad 5 comprises a thermoplastic elastomer which is bonded to the bottom face 3 of the chock body 2 and the chock body 2 may conveniently comprise a polyurethane material.

A through hole 18 is provided in the chock body 2 extending between the opposite side faces 9, 10 of the chock body 2. Outer ends of the through hole 18 are provided with an annular countersunk periphery 19. The through hole 18 is for reception and through passage of an associated release cord 20. The term "release cord" as used herein should be taken to include rope, cable and chain, and the like flexible cord material. This cord 20 enables a user to readily easily pull away or disengage a wheel chock 1 from a wheel of the support rack. The release cord 20 when fed through the hole 18 is secured on the chock body 2 by a stopper knot 21.

A tag 22 may be mounted on the cord 20 by an eyelet 23. A hidden magnet 24 may be incorporated in the tag 22 to facilitate hanging the wheel chock 1 on a side of the storage rack when not in use or for neatly storing the cord 20 on the storage rack after engaging the wheel chock 1 with a wheel of the storage rack.

The chock body 2 may comprise a plastics material such as polyurethane or polyethylene material. The grip pad 5 may comprise a thermoplastic elastomer or a neoprene material.

In use, to lock a wheel of a support rack, the wheel-engaging front face 4 of the wheel chock 1 is engaged with the wheel of the support rack, wedging the lower end of the wheel-engaging front face 4 and the lip 6 of the grip pad 5 between the wheel of the support rack and the ground on which the wheel of the support rack is standing. It will be noted that the weight of the support rack tends to compress and grip the lip 6 for firm engagement between the wheel chock 1 and the wheel of the support rack, locking the wheel of the support rack. It will be noted also that the material of the grip pad 5 is such that a bottom face of the grip pad 5 frictionally engages and grips the ground or floor upon which it stands. Each wheel chock 1 can be readily easily disengaged from the wheel of the support storage rack by pulling on the associated release cord 20.

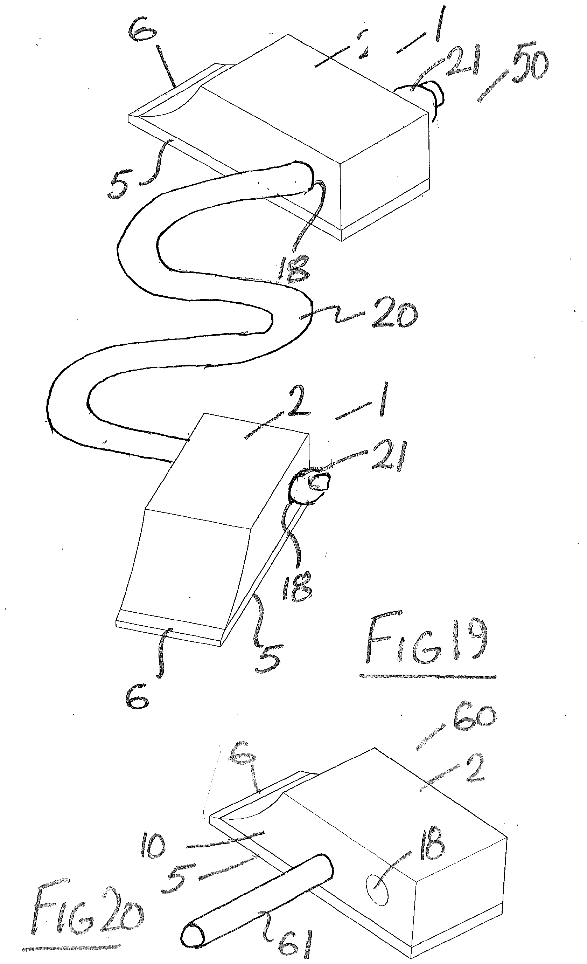

Conveniently, if desired, a pair of the wheel chocks 1 may be interconnected by means of a common release cord 20 extending therebetween, as shown in Fig. 19. Indeed, it is also envisaged that four of the wheel chocks 1, that is all the wheel chocks 1 required for a single support rack, could be interconnected by a common release cord 20 assembly.

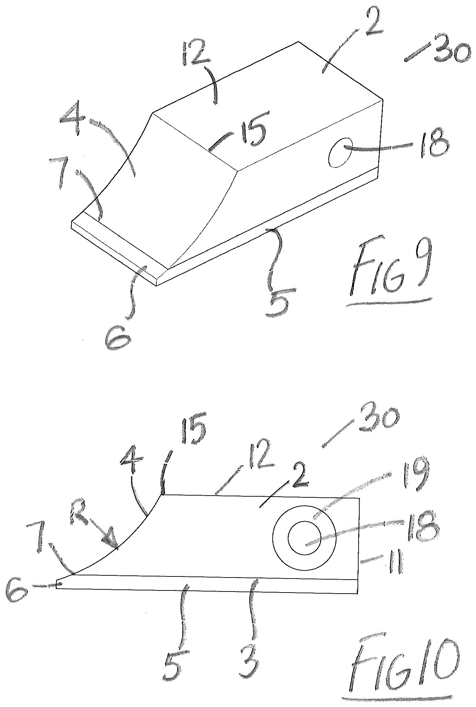

Referring now to Fig. 9 and Fig. 10, there is shown another wheel chock according to a second embodiment of the invention, indicated generally by the reference numeral 30. Parts similar to those described previously are assigned the same reference numerals. This is largely similar to the wheel chock 1 described previously, however, in this case, a wheel-engaging front face 4 with a different radius of curvature R is provided.

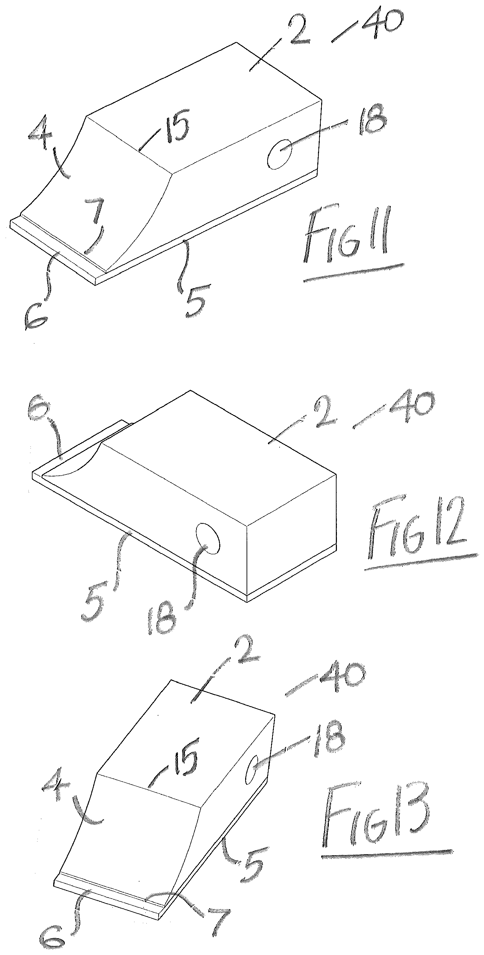

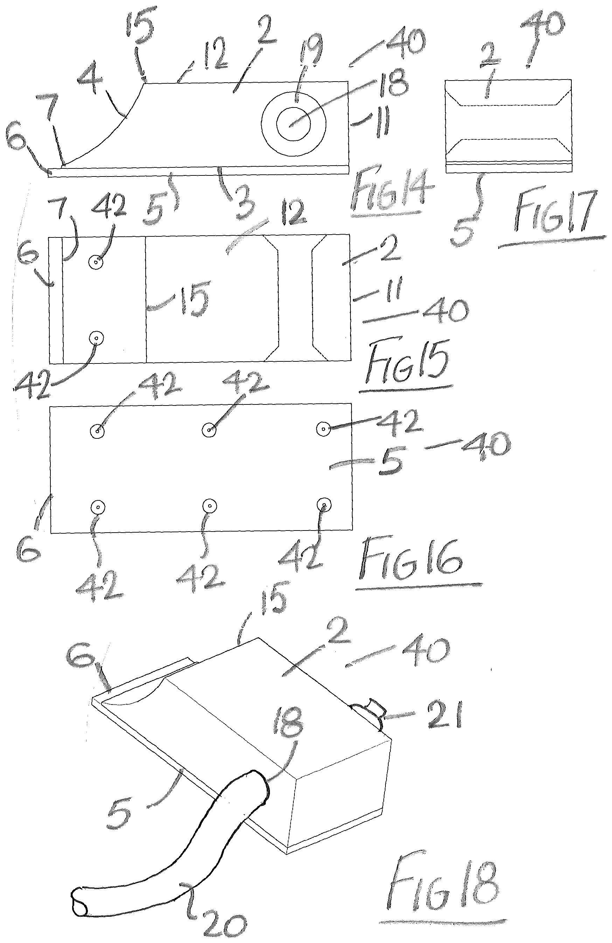

Referring now to Fig. 11 to Fig. 18, there is shown another wheel chock according to a third embodiment of the invention, indicated generally by the reference numeral 40. Parts similar to those described previously are assigned the same reference numerals. In this case, the resilient grip pad 5 comprises a mid to high density neoprene insertion rubber material and the resilient grip pad 5 is mechanically fixed to the bottom face 3 of the chock body 2. A plurality of spaced-apart rivets 42 attach the grip pad 5 to the bottom face 3 of the chock body 2, the rivets being engaged between the grip pad 5 and associated mounting holes in the chock body 2. If desired, a top face of the grip pad 5 may also be adhesively bonded to the bottom face 3 of the chock body 2.

Fig. 19 shows a pair 50 of wheel chocks 1 interconnected by a common release cord 20, outer ends of which are secured at each wheel chock 1 by stopper knots 21.

Referring now to Fig. 20, there is shown another wheel chock according to a further embodiment of the invention, indicated generally by the reference numeral 60. Parts similar to those described previously are assigned the same reference numerals. In this case a finger-hold or handgrip 61 is mounted on the chock body 2 and projects laterally outwardly from one of the side faces 9,10 of the chock body 2. This handgrip 61 is formed by an elongate rod and aids wheel chock 60 placement in engagement with a storage rack wheel beneath the storage rack. The handgrip 61 is of sufficient length to project outwardly from the storage rack when the chock body 2 is engaged with a wheel of the storage rack so it is easily gripped. The handgrip 61 is particularly useful for some storage racks which have a low profile and ground clearance reduced from a normal 6cm to about 3.5cm, which restricts access for placing the wheel chock 60 in engagement with the wheels of the storage rack. Various handgrip configurations could be provided.

While the invention is primarily concerned with securely locking/braking mobile storage racks for servers in data centres, it will be appreciated that the wheel chocks 1, 30, 40 of the invention may be used in similar fashion with other mobile racks, carts and vehicles.

The terms "comprise" and "include", and any variations thereof required for grammatical reasons, are to be considered as interchangeable and accorded the widest possible interpretation.

The invention is not limited to the embodiments hereinbefore described but may be varied in both construction and detail within the scope of the appended claims.

## Claims

1. A wheel chock (1) for a mobile storage rack with ground-engaging wheels, the wheel chock (1) comprising a chock body (2) having a bottom face (3) and an inclined wheel-engaging front face (4) extending upwardly from the bottom face (3) at a side of the bottom face (3), and a resilient grip pad (5) attached to the bottom face (3) and having a lip (6) projecting outwardly of the bottom face (3) at a bottom edge (7) of the wheel-engaging front face (4).

2. The wheel chock (1) as claimed in claim 1, wherein the wheel-engaging front face (4) is arcuate, curving between a top edge (15) and the bottom edge (7) of the wheel-engaging front face (4).

3. The wheel chock (1) as claimed in claim 2, wherein the wheel-engaging front face (4) has a radius of curvature (R) greater than the radius of curvature of the wheels of the storage rack.

4. The wheel chock (1) as claimed in claim 3, wherein the wheel-engaging front face (4) has a radius of curvature (R) in the range 50mm to 65mm.

5. The wheel chock (1) as claimed in any one of the preceding claims, wherein the lip (6) extends forwardly of the bottom edge (7) of the wheel-engaging front face (4) by 4mm to 6mm.

6. The wheel chock (1) as claimed in claim 5, wherein the lip (6) extends forwardly of the bottom edge (7) of the wheel-engaging front face (4) by 5mm.

7. The wheel chock (1,40) as claimed in any one of the preceding claims, wherein the grip pad (5) comprises a thermoplastic elastomer or a neoprene material.

8. The wheel chock (1) as claimed in any one of the preceding claims, wherein the grip pad (5) is bonded to the bottom face (3) of the chock body (2).

9. The wheel chock (40) as claimed in any one of claims 1 to 7, wherein the grip pad (5) is attached to the bottom face (3) of the chock body (2) by a number of spaced-apart rivets (42) engaged between the grip pad (5) and the chock body (2).

10. The wheel chock (60) as claimed in any one of the preceding claims, wherein a handgrip (61) is mounted on the chock body (2) and projects laterally outwardly from a side face (10) of the chock body (2).

11. The wheel chock (1) as claimed in any one of the preceding claims, wherein the chock body (2) has a through-hole (18) for reception and through passage of a release cord (20).

12. The wheel chock (1) as claimed in claim 11, wherein the through hole (18) extends between opposite side faces (9,10) of the chock body (2).

13. The wheel chock (1) as claimed in claim 11 or claim 12, wherein a tag (22) is mounted on the release cord (20), the tag (22) incorporating a magnet (24) for attaching the wheel chock (1) to the storage rack.

14. The wheel chock (1) as claimed in any one of the preceding claims, wherein the chock body (2) comprises a plastics material.

15. A pair (50) of wheel chocks (1) as claimed in any one of the preceding claims, which are interconnected by a common release chord (20).
